# DEMANDE DE BREVET EUROPEEN

(11) **EP 3 916 214 A1**
(43) Date de publication de la demande: **01.12.2021**
(21) Numéro de dépôt: 21175967.5
(22) Date de dépôt: 26.05.2021
(51) Int. Cl.: F02M 35/10, H01M 10/613, H01M 10/625, F02M 35/16, B60K 13/02

(54) **CIRCUIT D'ADMISSION D'AIR REFROIDISSANT UNE BATTERIE**

(30) Priorité: 27.05.2020 FR 2005600
(71) Demandeur: RENAULT s.a.s., 92100 Boulogne-Billancourt (FR)
(72) Inventeur: GHIRARDINI, Armand, 78430 Louveciennes (FR); GUIGNARD, Fabrice, 78960 Voisins-le-Bretonneux (FR); HIRON, Christian, 78690 Les Essarts le Roi (FR); PAROLINI, PASCAL, 95720 LE MESNIL AUBRY (FR)

(57) **Abrégé**

L'invention porte sur un circuit d'admission d'air frais (30) pour moteur à combustion interne (2), notamment pour moteur à combustion interne (2) de véhicule, notamment de véhicule automobile (1), le circuit d'admission d'air frais (30) comprenant un emplacement (60) de réception pour une batterie (20), notamment une batterie de type lithium-ion, notamment une batterie destinée à alimenter en courant électrique un moyen de démarrage d'un tel moteur à combustion interne (2), de sorte que le flux d'air frais circulant au sein du circuit d'admission d'air frais (30) refroidit la batterie (20).

## Description

### Domaine Technique de l'invention

L'invention concerne un circuit d'admission d'air frais pour véhicule. L'invention porte encore sur un agencement comprenant un tel circuit d'admission d'air frais. L'invention porte encore sur un véhicule comprenant un tel circuit d'admission d'air frais et/ou un tel agencement.

### Etat de la technique antérieure

Un véhicule, en particulier un véhicule automobile, a généralement un compartiment moteur restreint. En outre, le compartiment moteur est généralement encombré par un grand nombre de composants, notamment du fait de normes de dépollution et/ou acoustiques et/ou de composants liés à la conduite autonome. Il est donc intéressant d'optimiser le volume disponible au sein du compartiment moteur afin de pouvoir implanter un maximum de composants sans impacter l'habitabilité du véhicule et sans augmenter les dimensions extérieures du véhicule.

Toutefois certains composants, comme une batterie utilisée pour l'alimentation électrique des équipements et/ou pour démarrer un moteur thermique équipant le véhicule, sont particulièrement difficiles à implanter en optimisant l'espace du compartiment moteur. En effet, une batterie, généralement de type plomb, a des dimensions standardisées en fonction de la puissance à fournir. Il convient alors de devoir s'adapter aux contraintes dimensionnelles imposées par la batterie pour optimiser l'espace du compartiment moteur.

### Présentation de l'invention

Le but de l'invention est de fournir un circuit d'admission d'air frais remédiant aux inconvénients ci-dessus. En particulier, l'invention permet l'intégration d'une batterie lithium-ion tout en libérant de l'espace au sein du compartiment moteur.

### Résumé de l'invention

Pour atteindre cet objectif, l'invention porte sur un circuit d'admission d'air frais pour moteur à combustion interne, notamment pour moteur à combustion interne de véhicule, notamment de véhicule automobile, le circuit d'admission d'air frais comprenant un emplacement de réception pour une batterie, notamment une batterie de type lithium-ion, notamment une batterie destinée à alimenter en courant électrique un moyen de démarrage d'un tel moteur à combustion interne, de sorte que le flux d'air frais circulant au sein du circuit d'admission d'air frais refroidit la batterie.

Le circuit d'admission d'air frais peut comprendre un filtre à air et l'emplacement peut être disposé en aval du filtre à air.

Le circuit d'admission d'air frais peut comprendre un boîtier comprenant :
- un orifice d'entrée pour l'entrée du flux d'air frais,
- un orifice de sortie pour la sortie du flux d'air frais,
- une ouverture destinée à être agencée en vis-à-vis ou sensiblement en vis-à-vis d'une face de refroidissement d'une batterie à refroidir.

L'invention porte encore sur un agencement comprenant un circuit d'admission d'air frais pour un moteur à combustion interne tel que défini précédemment et une batterie, notamment une batterie lithium-ion, la batterie comprenant une face de refroidissement en vis-à-vis ou sensiblement en vis-à-vis de l'ouverture du boîtier, l'ouverture du boîtier comprenant un pourtour, le pourtour épousant sensiblement un périmètre de la face de refroidissement de la batterie.

La face de refroidissement de la batterie est une face supérieure, autrement dit une face s'étendant dans un plan longitudinal et transversal ou sensiblement longitudinal et transversal et orienté vers le haut.

La face de refroidissement s'étend sur une partie seulement de l'aire totale de la section de la batterie selon un plan longitudinal et transversal, par exemple de l'ordre de la moitié de l'aire totale.

La face de refroidissement ne s'étend pas au niveau ou au-dessus d'une partie électronique de puissance.

Un moyen d'étanchéité, notamment un joint, peut être interposé entre le pourtour de l'ouverture du boîtier et le périmètre de la face de refroidissement de la batterie de sorte à assurer l'étanchéité à l'air.

Le boîtier peut comprendre un moyen de fixation sur la batterie, notamment au moins un orifice ménagé sur au moins une oreille en saillie sur le boîtier.

La batterie peut comprendre plusieurs cellules, notamment trois cellules de l'ordre de 4,5V, et un moyen de dissipation de la chaleur au contact ou sensiblement au contact des cellules, notamment un moyen de dissipation rigide de sorte à protéger les cellules en cas de crash, notamment une équerre, notamment une équerre en aluminium et/ou comprenant des ailettes.

Un conducteur, notamment de la pâte thermique, peut être interposé entre le moyen de dissipation de la chaleur et les cellules.

La batterie peut comprendre un isolant thermique et/ou phonique, notamment une coque en plastique, notamment garnie en mousse polyuréthane.

L'invention porte encore sur un véhicule, notamment un véhicule automobile, comprenant un circuit d'admission d'air frais tel que défini précédemment et/ou un agencement tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue schématique d'un véhicule selon un mode de réalisation.
[Fig. 2] La figure 2 est une vue de dessus d'un agencement selon un mode de réalisation.
[Fig. 3] La figure 3 est une vue en perspective de l'agencement selon le mode de réalisation.
[Fig. 4] La figure 4 est une vue en perspective d'une batterie de l'agencement selon un mode de réalisation.
[Fig. 5] La figure 5 est une vue en perspective partielle de la batterie selon un mode de réalisation.
[Fig. 6] La figure 6 est une vue en perspective partielle de la batterie selon le mode de réalisation.
[Fig. 7] La figure 7 est une vue schématique en coupe partielle de la batterie selon le mode de réalisation.
[Fig. 8] La figure 8 est une vue en perspective d'un boîtier de l'agencement selon un mode de réalisation.
[Fig. 9] La figure 9 est une autre vue en perspective du boîtier selon le mode de réalisation.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

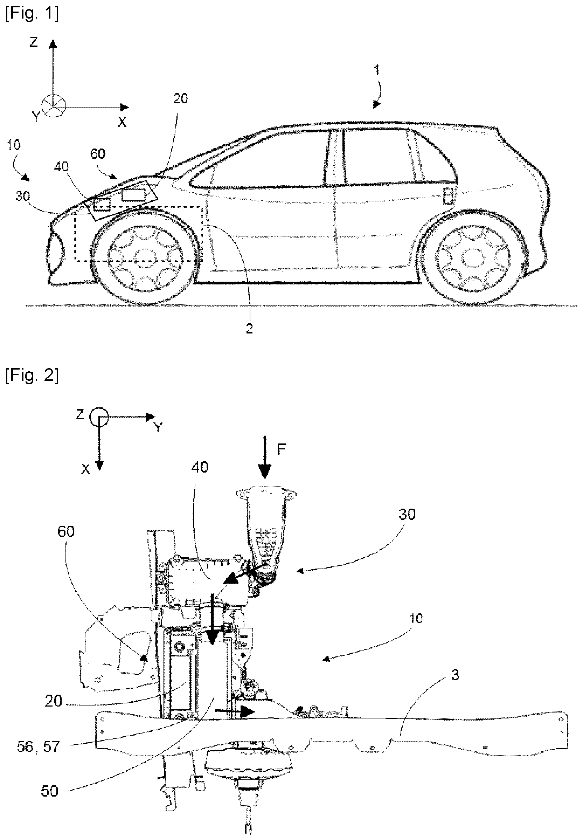

La figure 1 illustre schématiquement un véhicule, en particulier un véhicule automobile 1, selon un mode de réalisation. Le véhicule automobile 1 comprend un moteur à combustion interne 2. Le véhicule automobile 1 comprend un agencement 10 selon un mode de réalisation. Le véhicule automobile 1 ou l'agencement 10 comprend un circuit d'admission d'air frais 30 selon un mode de réalisation.

Plus précisément, l'agencement 10 comprend un circuit d'admission d'air frais 30 pour le moteur à combustion interne 2. L'agencement 10 comprend encore une batterie 20. La batterie est de préférence une batterie lithium-ion. Par exemple, la batterie est destinée à alimenter en courant électrique un moyen de démarrage du moteur à combustion interne 2.

Le circuit d'admission d'air frais 30 comprend un emplacement 60 de réception pour la batterie 20. Comme il sera expliqué par la suite, un flux d'air frais F circulant au sein du circuit d'admission d'air frais 30 refroidit la batterie 20.

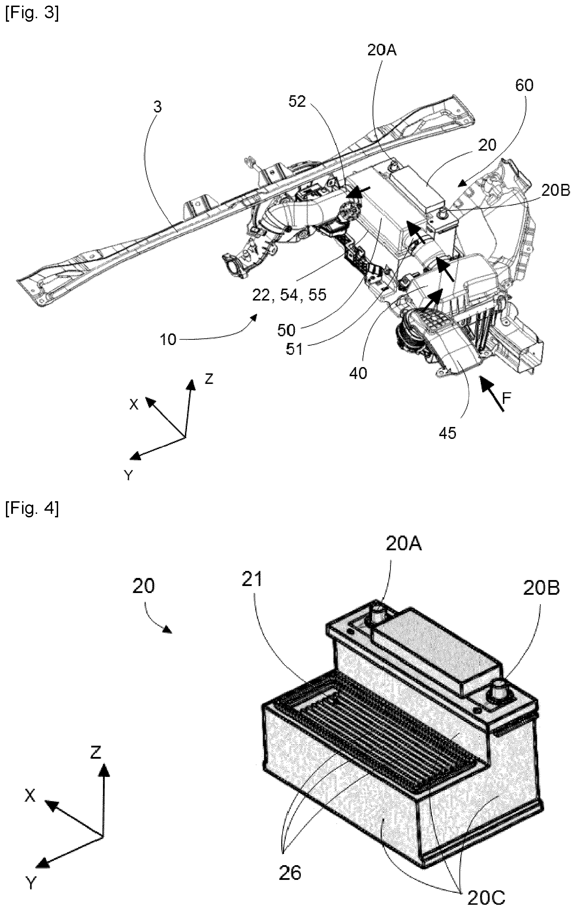

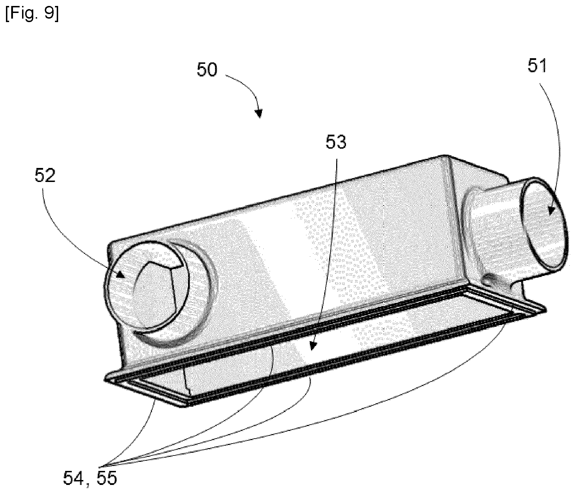

De préférence, le circuit d'admission d'air frais comprend un filtre à air 40. Avantageusement, l'emplacement 60 est disposé ou agencé en aval du filtre à air 40. Autrement dit le flux d'air parcourt ou traverse d'abord le filtre à air 40 avant d'accéder au niveau de ou dans l'emplacement 60. Avantageusement, comme illustré sur les figures 2 et 3, le circuit d'admission d'air frais 30 comprend un boîtier 50. Le boîtier 50 comprend un orifice d'entrée 51 pour l'entrée du flux d'air frais F. Le boîtier 50 comprend encore un orifice de sortie 52 pour la sortie du flux d'air frais F. Comme illustré en particulier sur la figure 9, le boîtier 50 comprend encore une ouverture 53 destinée à être agencée en vis-à-vis ou sensiblement en vis-à-vis d'une face de refroidissement 21 de la batterie.

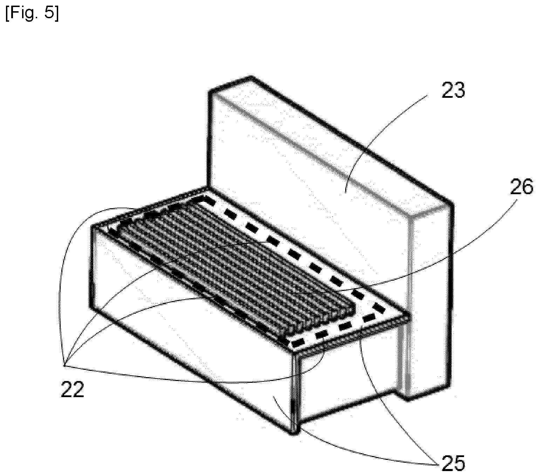

Ainsi, la batterie 20, illustrée notamment sur la figure 4, comprend une face de refroidissement 21 en vis-à-vis ou sensiblement en vis-à-vis de l'ouverture 53 du boîtier 50. L'ouverture 53 du boîtier 50 comprend un pourtour 54. Le pourtour 54 épouse ou épouse sensiblement un périmètre 22 de la face de refroidissement 21 de la batterie 20 illustré en particulier sur la figure 5 (périmètre 22 de la face 21 représentés en pointillés).

De préférence, un moyen d'étanchéité 55, notamment un joint, est interposé entre le pourtour 54 de l'ouverture 53 du boîtier 50 et le périmètre 22 de la face de refroidissement 21 de la batterie 20 de sorte à assurer l'étanchéité à l'air, comme illustré sur les figures 3 et 9.

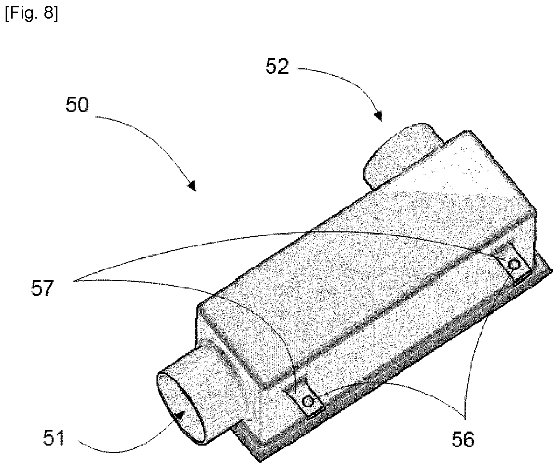

Avantageusement, le boîtier 50 comprend un moyen de fixation sur la batterie 20, par exemple au moins un orifice 56 ménagé sur au moins une oreille 57. La ou les oreilles 57 sont ménagées de préférence en saillie sur le boîtier 50. Par exemple, comme illustré sur la figure 8, deux oreilles 57 sont prévues sur le boîtier, chaque oreille 57 comprenant un trou 56.

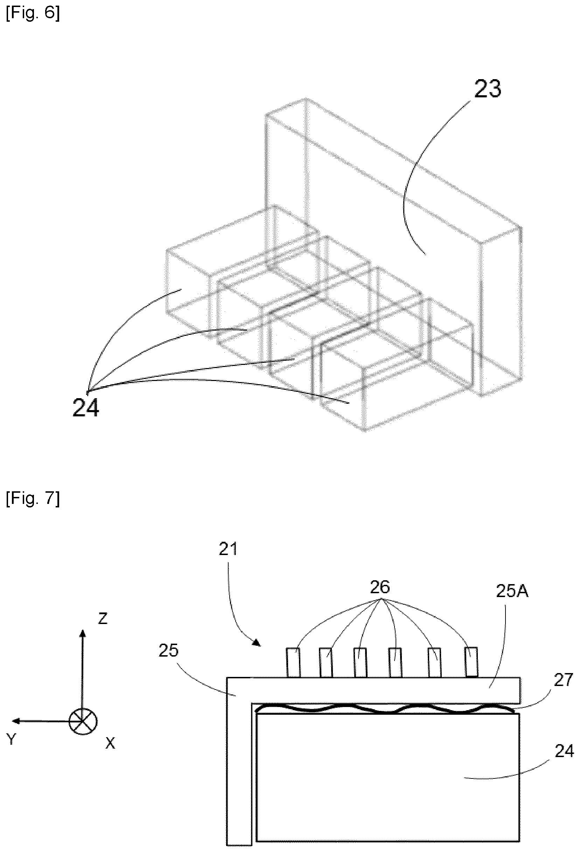

Comme illustré en particulier sur la figure 6, la batterie 20 comprend plusieurs cellules 24, par exemple trois cellules de l'ordre de 4,5V, de sorte à obtenir une tension de l'ordre de 14V. De préférence la batterie comprend une partie électronique de puissance 23, par exemple une carte électronique apte à gérer la charge et/ou la décharge et/ou les différentes fonctions de contrôle de fonctionnement et/ou les relais nécessaires au fonctionnement de la batterie.

Par exemple des bornes standards de connexion électrique 20A, 20B équipent la batterie 20, comme illustré sur la figure 4. De préférence, une coque ou paroi épaisse 20C, par exemple en plastique garnie d'une mousse polyuréthane, assure l'absorption acoustique et thermique. Autrement dit, des isolants thermique et/ou phonique sont par exemple intégrés à la batterie.

Par exemple, comme illustré sur la figure 7, la batterie 20 comprend un moyen de dissipation 25 de la chaleur au contact ou sensiblement au contact des cellules 24. De préférence, le moyen de dissipation 25 est rigide ou sensiblement rigide de sorte à pouvoir protéger les cellules 24 en cas de crash du véhicule. Par exemple, le moyen de dissipation de la chaleur comprend une équerre, par exemple en aluminium, par exemple incluse dans la batterie. De préférence, le moyen de dissipation de la chaleur 25 comprend au moins une ailette 26, de préférence plusieurs ailettes comme illustré en particulier sur les figures 4, 5 et 7. Autrement dit, l'équerre en aluminium est par exemple striée pour fournir une meilleure conduction thermique et mieux évacuer les calories de la chaleur de la batterie.

A noter que sur la figure 6, seules les cellules 24 et la partie électronique de puissance 23 de la batterie sont représentées.

Avantageusement, comme illustré sur la figure 7, un conducteur 27, par exemple de type pâte thermique, est interposé entre le moyen de dissipation 25 de la chaleur et les cellules 24. Ainsi, de la pâte thermique est apposée sur le dessus du ou des packs de cellules et assure le contact avec l'équerre. La pâte thermique joue le rôle de conducteur thermique entre les cellules et le moyen de dissipation de la chaleur.

Plus précisément, comme illustré notamment sur la figure 3, l'air frais F accède par une prise d'air 45, puis entre dans le filtre à air 40 avant d'accéder au sein du boîtier 50 par l'entrée 51. Comme vu précédemment, la face 21 de la batterie est de préférence recouverte au moins partiellement, voire en totalité, par le moyen de dissipation de la chaleur 25, de préférence de type équerre. Ainsi, le moyen de dissipation de la chaleur extrait les calories des cellules 24 et les transmets au moins en partie au niveau des ailette 26. Cette extraction des calories est facilitée par la pâte thermique 27 intercalée entre les cellules 24 et une aile 25A de l'équerre. De préférence, la pâte thermique 27 est apposée de sorte à assurer un contact permanent et continu entre les cellules et l'équerre. Etant donnée l'ouverture 53 ménagée dans le boîtier 50 au niveau de la face ou surface 21, plus précisément en vis-à-vis de l'aile 25A de l'équerre comprenant les ailettes 26, une partie du flux d'air frais F circule sur la surface 21 (aile 25A de l'équerre), en particulier autour des ailettes. Les calories sont alors prélevées de l'aile 25A de l'équerre, notamment via les ailettes 26, et évacuées par le flux d'air F en direction de l'admission du moteur à combustion interne 2.

Ainsi le boîtier 50 alimente l'admission du moteur en air frais issu du filtre à air 40 et refroidit la batterie. Comme évoqué précédemment, un moyen d'étanchéité 55 s'étend entre le boîtier 50 et la surface ou le pourtour 22 de la surface de la batterie à refroidir. Cette étanchéité entre le boîtier et la batterie est importante pour ne pas « salir » l'air « propre » provenant du filtre à air. L'air sortant du boîtier est donc « propre » et viable pour le bon fonctionnement du moteur.

En résumé, la solution permet de remplacer une batterie plomb par une batterie lithium-ion, par exemple de l'ordre de 14 V de tension. En effet le circuit d'admission 30 d'air frais assure un refroidissement continu de la batterie lithium-ion ce qui permet d'assurer un fonctionnement optimal d'une telle batterie. Ainsi, malgré des températures du compartiment moteur se situant entre 70 et 90 degrés Celsius avec des pics jusqu'à 150 degrés Celsius, la durée de vie de la batterie lithium-ion n'est pas altérée. Le système de refroidissement de la batterie lithium-ion assuré par le circuit d'admission d'air n'a que peu, voire pas d'impact en termes d'encombrement au sein du compartiment moteur. En outre, le refroidissement est simple, particulièrement fiable, peu coûteux et n'ajoute que peu de masse au véhicule.

La solution permet donc de recourir à une batterie lithium-ion dont les dimensions peuvent être adaptées afin d'optimiser l'espace dans le compartiment moteur. Ainsi, les cellules 24, en particulier la disposition des cellules au sein de la batterie, peuvent être choisies pour chaque véhicule de manière à réduire l'impact en termes de volume dans le compartiment moteur. Le système de refroidissement pour la batterie est donc logé dans le compartiment moteur du véhicule automobile.

En outre, grâce au moyen de dissipation de chaleur, de préférence en forme d'équerre, la batterie n'est pas impactée en cas de crash. En effet, une forme d'équerre permet d'absorber davantage d'énergie en cas de choc, notamment au niveau des cellules. Autrement dit, la batterie est renforcée par l'équerre ce qui la protège lors d'un choc, en particulier au niveau de ses cellules particulièrement fragiles. Grâce à la protection engendrée par l'équerre, la batterie continue de fonctionner pendant et après un choc, même violent, et peut ainsi assurer ses fonctions de sécurité telles que le déclenchement des coussins gonflables et/ou le déverrouillage des portes.

En outre, la solution n'a pas d'impact sur la cartographie du moteur thermique et/ou sur les performances du moteur thermique. Elle ne crée pas de perte de charge significative du flux d'air frais F et réchauffe peu l'air de l'admission. En effet, par exemple, la puissance à évacuer de la batterie est de l'ordre de 5 à 20 watts. Cette puissance est donc absorbée par l'air frais venant alimenter le moteur thermique sans incidence sur la température de l'air frais parvenant à l'admission du moteur. A noter que le débit d'air dans l'admission du moteur varie par exemple de l'ordre de 0 I/min (moteur arrêté) à 6000 I/min (moteur à plein régime). Le conduit ou circuit d'admission d'air frais permet donc à la fois le refroidissement de la batterie lithium-ion et l'alimentation en air frais du moteur. La combinaison des deux fonctions offre un important gain de volume dans le compartiment moteur. De préférence, l'emplacement de la batterie lithium-ion est choisi de sorte à faciliter l'intégration du conduit d'admission, le refroidissement des éléments ou cellules de la batterie et la résistance de la batterie en cas de choc. Comme illustré sur les figures 2 et 3, par exemple l'emplacement 60 de la batterie est situé dans un coin supérieur arrière gauche du compartiment moteur, devant un tablier 3 de séparation entre le compartiment moteur et l'habitacle. Alternativement, l'emplacement peut être le coin supérieur arrière droit du compartiment moteur ou un autre endroit. De préférence, la plus grande dimension de la batterie s'étend longitudinalement ou sensiblement longitudinalement. De préférence, l'équerre s'étend sur toute cette dimension ce qui offre une très bonne résistance des cellules en cas de crash. En outre, l'équerre constitue une pièce d'interface entre les cellules et l'air frais ce qui évite tout contact direct entre les cellules et le flux d'air F.

Par exemple le gain d'espace avec l'agencement 10 selon la direction transversale est compris entre 150 mm et 180 mm, par exemple de l'ordre de 165 mm.

Ainsi la solution propose un moyen de refroidissement pour batterie lithium-ion, particulièrement compact, économique, permettant le gain d'espace dans le compartiment moteur d'un véhicule automobile, tout en permettant à la batterie de résister à un crash. Du fait qu'une batterie lithium-ion craigne la chaleur, la solution permet une durée de vie de la batterie optimale en assurant un refroidissement efficace et constant.

A noter que même à vitesse lente voire à l'arrêt du véhicule, tant que le moteur à combustion interne fonctionne, le débit d'air frais généré par l'admission du moteur permet de refroidir la batterie.

La solution permet un gain de temps au montage de la batterie puisque les isolants phonique et/ou thermique sont intégrés à celle-ci. En outre, le nombre de pièces est diminué, grâce à l'absence d'isolants dans le compartiment moteur et l'absence de pièce supplémentaire pour le refroidissement de la batterie.

Enfin, la solution permet d'implanter une batterie de forme et de dimensions non standards, notamment en agençant la batterie en fonction de l'espace disponible au sein du compartiment moteur.

En remarque, la solution selon l'invention atteint donc l'objectif recherché de pouvoir intégrer une batterie en limitant le volume occupé dans le compartiment moteur et présente les avantages suivants :
- elle ne consomme pas d'énergie électrique ;
- elle peut être utilisée sur toutes les gammes de véhicules automobiles, aussi bien à motorisation thermique qu'à motorisation hybride ;
- elle peut être utilisée pour tous types de véhicules équipés d'un moteur à combustion interne nécessitant une optimisation du volume du compartiment moteur ;
- elle peut être appliquée à tous moteurs thermiques utilisant une batterie, en particulier une batterie lithium-ion.

Bien que dans le mode de réalisation décrit, le compartiment moteur recevant le moteur à combustion interne, le circuit d'admission d'air frais et la batterie soit disposé à l'avant du véhicule, le compartiment moteur recevant le moteur à combustion interne, le circuit d'admission d'air frais et la batterie peut par exemple être disposé à l'arrière.

## Revendications

1. Agencement (10) comprenant un circuit d'admission d'air frais (30) pour un moteur à combustion interne (2), notamment pour moteur à combustion interne (2) de véhicule, notamment de véhicule automobile (1), et une batterie (20), notamment une batterie lithium-ion, la batterie (20) comprenant une face de refroidissement (21) en vis-à-vis ou sensiblement en vis-à-vis de l'ouverture (53) du boîtier (50), le circuit d'admission d'air frais (30) comprend un emplacement (60) de réception pour une batterie (20), notamment une batterie de type lithium-ion, notamment une batterie destinée à alimenter en courant électrique un moyen de démarrage d'un tel moteur à combustion interne (2), de sorte que le flux d'air frais (F) circulant au sein du circuit d'admission d'air frais (30) refroidit la batterie (20), le circuit d'admission d'air frais (30) comprend en outre un boîtier (50) comprenant :
- un orifice d'entrée (51) pour l'entrée du flux d'air frais (F),
- un orifice de sortie (52) pour la sortie du flux d'air frais (F),
- une ouverture (53) destinée à être agencée en vis-à-vis ou sensiblement en vis-à-vis d'une face de refroidissement (21) de la batterie (20) à refroidir,
l'agencement étant **caractérisé en ce que** l'ouverture (53) du boîtier (50) comprend un pourtour (54), le pourtour (54) épousant sensiblement un périmètre (22) de la face de refroidissement (21) de la batterie (20).

2. Agencement (10) selon la revendication précédente, **caractérisé en ce qu'**il comprend un filtre à air (40) et **en ce que** l'emplacement (60) est disposé en aval du filtre à air (40).

3. Agencement (10) selon la revendication précédente, **caractérisé en ce qu'**un moyen d'étanchéité (55), notamment un joint, est interposé entre le pourtour (54) de l'ouverture (53) du boîtier (50) et le périmètre (22) de la face de refroidissement (21) de la batterie (20) de sorte à assurer l'étanchéité à l'air.

4. Agencement (10) selon l'une des revendications précédentes, **caractérisé en ce que** le boîtier (50) comprend un moyen de fixation sur la batterie (20), notamment au moins un orifice (56) ménagé sur au moins une oreille (57) en saillie sur le boîtier (50).

5. Agencement (10) selon l'une des revendications précédentes, **caractérisé en ce que** la batterie (20) comprend plusieurs cellules (24), notamment trois cellules de l'ordre de 4,5V, et un moyen de dissipation (25) de la chaleur au contact ou sensiblement au contact des cellules (24), notamment un moyen de dissipation (25) rigide de sorte à protéger les cellules (24) en cas de crash, notamment une équerre, notamment une équerre en aluminium et/ou comprenant des ailettes (26).

6. Agencement (10) selon la revendication précédente, **caractérisé en ce qu'**un conducteur (27), notamment de la pâte thermique, est interposé entre le moyen de dissipation (25) de la chaleur et les cellules (24).

7. Agencement (10) selon l'une des revendications précédentes, **caractérisé en ce que** la batterie (20) comprend un isolant (20C) thermique et/ou phonique, notamment une coque en plastique, notamment garnie en mousse polyuréthane.

8. Agencement (10) selon l'une des revendications précédentes, **caractérisé en ce que** la face de refroidissement (21) de la batterie (20) est une face supérieure, autrement dit une face s'étendant dans un plan longitudinal et transversal ou sensiblement longitudinal et transversal et orienté vers le haut.

9. Agencement (10) selon l'une des revendications précédentes, **caractérisé en ce que** la face de refroidissement (21) s'étend sur une partie seulement de l'aire totale de la section de la batterie (20) selon un plan longitudinal et transversal, par exemple de l'ordre de la moitié de l'aire totale.

10. Agencement (10) selon l'une des revendications précédentes, **caractérisé en ce que** la face de refroidissement (21) ne s'étend pas au niveau ou au-dessus d'une partie électronique (23) de puissance.

11. Véhicule, notamment véhicule automobile (1), **caractérisé en ce qu'**il comprend un agencement (10) selon l'une des revendications précédentes.
